Europäisches Patentamt

European Patent Office

Office européen des brevets

(19)

(11) Publication number: **0 076 578**
**B1**

(12) **EUROPEAN PATENT SPECIFICATION**

(45) Date of publication of patent specification: **06.03.85**

(21) Application number: **82304801.2**

(22) Date of filing: **13.09.82**

(51) Int. Cl.⁴: **H 01 B 17/58,** H 02 B 1/04, H 02 G 3/22

(54) **Grommet assembly for attachment to an apertured panel.**

(30) Priority: **02.10.81 US 307769**

(43) Date of publication of application:
**13.04.83 Bulletin 83/15**

(45) Publication of the grant of the patent:
**06.03.85 Bulletin 85/10**

(84) Designated Contracting States:
**DE FR GB**

(56) References cited:
**FR-A-1 519 268**
**FR-A-2 325 220**
**US-A-2 424 757**
**US-A-3 163 882**
**US-A-4 272 645**
**US-A-4 289 924**

(73) Proprietor: **GENERAL MOTORS CORPORATION**
**General Motors Building 3044 West Grand**
**Boulevard**
**Detroit Michigan 48202 (US)**

(72) Inventor: **Schramme, Stephan Hunt**
**336 South Colonial**
**Cortland Ohio 44410 (US)**
Inventor: **Kelley, Mark Alan**
**2941 Malibu Drive**
**Warren Ohio 44481 (US)**

(74) Representative: **Breakwell, John Neil Bower**
**et al**
**GM Patent Section Luton Office (F6) P.O. Box**
**No. 3 Kimpton Road**
**Luton Beds. LU2 0SY (GB)**

## Description

This invention relates to a grommet assembly as specified in the preamble of claim 1, for example as disclosed in FR—A—2,325,220.

Attachment of an assembly to an apertured support can be achieved in various ways. The proposal made in FR—A—2,325,220, and a rather similar proposal made in US—A—3,163,882, represents one possible approach for the attachment of a cable grommet assembly.

An alternative approach forms the subject of FR—A—1,519,268, according to which a switch unit for mounting in a rectangular aperture in a support 92 includes a flexible rear leg 62 adapted to be introduced into the aperture and engaged under the support adjacent one edge of the aperture, and a flexible arm 66 adapted to cooperate with the support at an opposite edge of the aperture to retain the switch unit in its mounted position.

The present invention is concerned with the problem of achieving improved, secure attachment of a grommet assembly of the general kind disclosed in FR—A—2,325,220 to an apertured panel, even in difficult assembly conditions.

For solving this problem, a grommet assembly in accordance with the present invention is characterised by the features specified in the characterising portion of claim 1.

By engaging the slot of the shank with a panel edge portion and then pivoting the shank into position in the panel aperture, attachment to the panel is facilitated, particularly in blind or difficult assembly operations.

Preferably a gasket is mounted on the rearward portion of the shank whereby the mounting of the retainer on the shank after the panel insertion ensures both secure fastening to the panel and a good seal at the face of the panel.

In the drawings:

Figure 1 is a fragmentary side view showing one embodiment of a grommet assembly in accordance with the present invention attached to an apertured bulkhead panel;

Figure 2 is a fragmentary front view of the grommet assembly and panel shown in Figure 1;

Figure 3 is a fragmentary section substantially along the line 3—3 of Figure 2, in the direction of the arrows;

Figure 4 is a fragmentary section substantially along the line 4—4 of Figure 3, in the direction of the arrows;

Figure 5 is an exploded perspective view of the grommet assembly shown in Figures 1 to 4, with a gasket omitted for clarity; and

Figure 6 and 7 are side views showing two positions of partial attachment of the grommet assembly to the apertured panel.

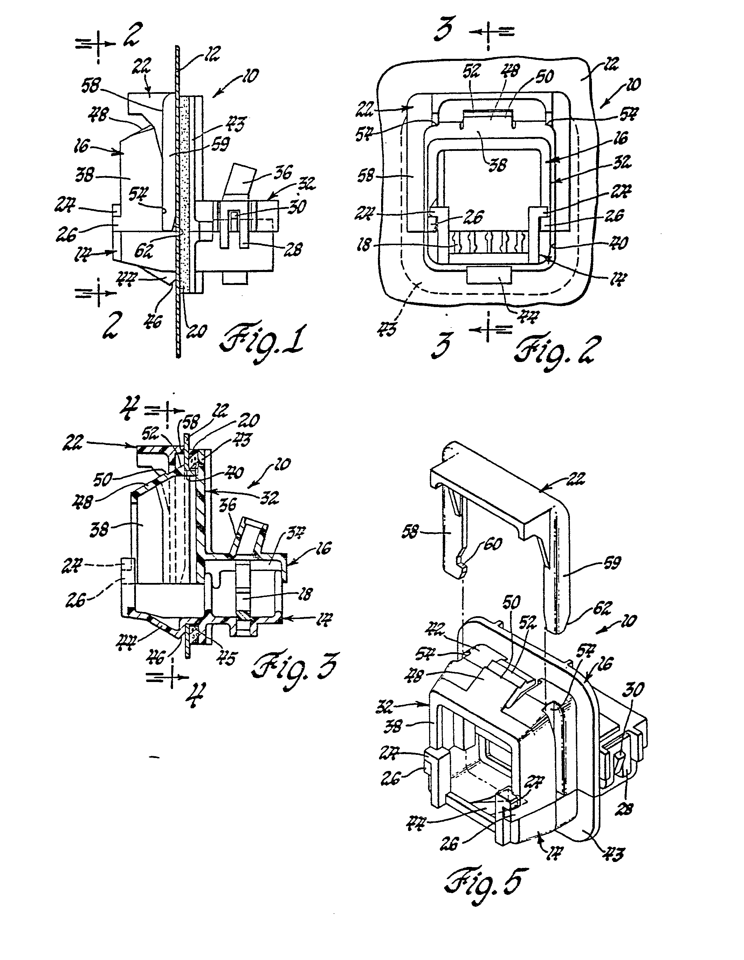

In the drawings, Figures 1 and 2 show a grommet assembly 10 in accordance with the present invention attached to an apertured bulkhead panel 12.

The grommet assembly 10 comprises two snap-assembled shells 14 and 16, a cable clip 18, a gasket 20 and a retainer 22.

The shells 14 and 16 are made of a hard plastics material, such as polyamide plastic (nylon), and are adapted to be assembled around a bundle of cables (not shown). A cable clip 18 is mounted in a hollow portion of the shell 14 to separate the cables. The shells 14 and 16 are attached to each other by structure which facilitates snap assembly of the two shells. More specifically, the shell 14 has two lateral lugs 24 at a forward (insertion) end thereof for cooperation with two longitudinal lugs 26 at a forward end of the shell 16, and a pair of upstanding latch arms 28 at a rearward (trailing) end thereof for cooperation with a pair of lateral nibs 30 at a rearward (trailing) end of the shell 16. The shells 14 and 16 are assembled together by hooking the longitudinal lugs 26 under the lateral lugs 24 at the forward end, and then swinging the shells 14 and 16 into an abutting position so that the latch arms 28 at the rearward end snap over the nibs 30 and lock the shells together. This snap-assembly and retention feature, *per se*, is not a part of this invention.

The shells 16 and 18 together form a hard plastics grommet 32 having a chamber 34 which houses the cable clip 18 and which can be filled with a sealant injected through an inlet 36 such that the sealant thereby forms a fluid-tight seal for a bundle of cables (not shown) passing through the chamber 34, with individual cables being separated in the chamber 34 by the cable clip 18 generally as described in the said United States Patent Number 4,289,924 (Pearce et al).

The present novel grommet assembly 10 includes means for attaching it to the apertured bulkead panel 12.

The shells 14 and 16 together form a grommet 32 having a shank 38 at the forward (insertion) end. The forward portion of the shank 38 is tapered to facilitate insertion into the panel aperture 40 and a rearward portion 42 is shaped to substantially fill the aperture 40 such that the shank 38 is thereby located both horizontally and vertically in the aperture 40. The grommet 32 abuts a flange 43 at the rearward end of the shank 38. The tapered forward portion of the shank 38 has a top wall of considerably steeper taper than the bottom and side walls so that the shank 38 can be inserted from the rear side into the panel aperture 40 in a cocked position and then pivoted into a tightly retained position as explained more fully below.

The bottom wall of the shank 38 has a rigid projection 44 which is spaced from the flange 43 to form a slot 45 for the reception of a lower edge portion of the panel 12 adjacent the aperture 40. The rigid projection 44 has a convex cam surface 46 to engage the lower edge portion of the panel 12 and guide the lower edge portion of the panel deeper into the slot 45.

The top wall of the shank 38 is formed with a flexible arm 48 that is attached at its forward end to the shank and projects rearwardly towards the flange 43. The flexible arm 48 has two longitudinally spaced projections 50 and 52 for engaging an upper edge portion of the panel 12.

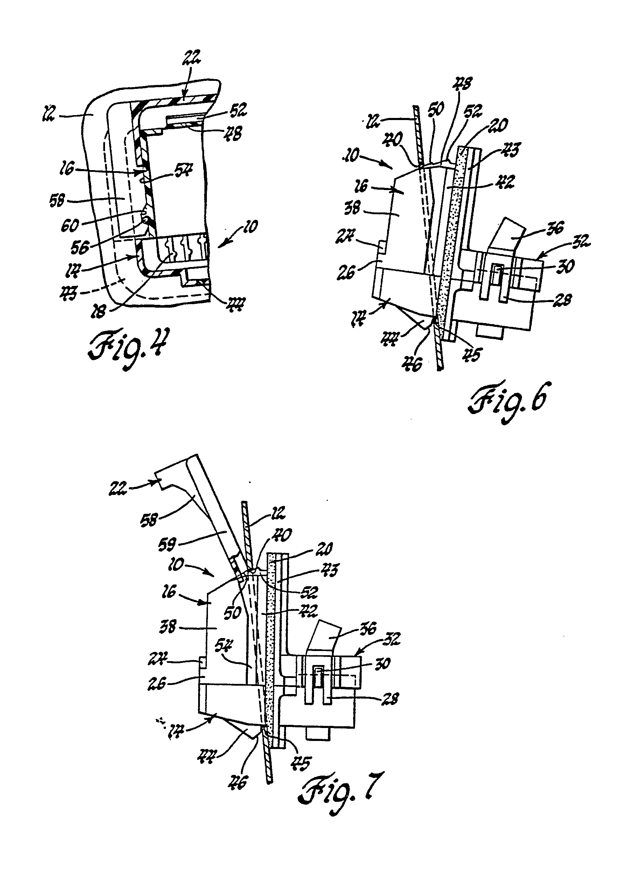

The side walls of the shank 38 each have a vertical slot 54 which is spaced from and parallel to the flange 43. The sides of the slots 54 which are remote from the flange 43 are tapered at the upper end for guiding the retainer 22 into the slots 54. One of the slots 54 has a projection 56 (shown in Figure 4) for locking the retainer 22 in place on the shank 38.

The retainer 22 comprises a flat, U-shaped body 58 having a U-shaped peripheral flange 59 which projects towards the flange 43 and engages the edge portions surrounding the panel aperture when the retainer 22 is locked in place by engagement of a notch 60 in the U-shaped body 58 with the projection 54. The bottom ends of the U-shaped flange 58 are tapered at 62 to facilitate insertion of the retainer 22 into the slots 54.

For assembly purposes, the grommet 32 is assembled around the bundle of cables, whereupon the gasket 20 is placed on the shank 38 so as to lie against the flange 43, and the chamber 34 is filled with a sealant through the inlet 36.

The grommet 31 and gasket 20 are then assembled to the panel 12 by inserting the shank 38 downwardly into the aperture 40 in a cocked position so that, as is shown in Figure 6, the lower edge portion of the panel 12·is received in the slot 45 between the rigid projection 44 and the gasket 20. The convex surface 46 guides the edge portion of the panel deeper into the slot 45, with the resilient gasket 20 yielding to accommodate the cocked orientation of the grommet 32 with respect to the panel 12.

When the lower edge portion of the panel 12 is properly disposed in the slot 45, the grommet 32 is pivoted about this edge portion to the upright position shown in Figure 3, in which the projection 52 on the latch arm 48 engages the upper edge portion of the panel 12. The retainer 22 is then assembled to the shank 38 by sliding the legs of the U-shaped body 58 into the slots 54 of the shank side walls. The retainer 22 ensures that the grommet 32 is securely fastened to the panel 12 and that the gasket 20 is compressed to form a good seal between the flange 43 and the front face of the panel 12.

In many applications the panel aperture 40 is not easily accessible, and the mounting of the grommet 32 and the gasket 20 on the panel 12 is a difficult or blind assembly operation. The above assembly procedure facilitates these assembly operations since assembly is relatively easy once the lower edge portion of the panel is disposed in the slot 45.

The grommet 32 also includes a temporary retention feature provided by the other projection 50 on the flexible arm 48, to further facilitate difficult or blind assembly operations. In difficult situations, pivoting of the grommet 32 and gasket 20 on the lower edge portion of the panel need take place only to a temporary retention position in which the projection 50 engages the upper edge portion of the panel 12 as shown in Figure 7. The retainer 22 is insertable into the slots 54 in this temporary retention position, and then further assembly movement of the retainer 22 automatically brings the grommet 32 into an upright position and securely holds the grommet in place while ensuring a good face seal at the gasket 20.

**Claims**

1. A grommet assembly in which a grommet (31) of hard plastics material adapted to accommodate a plurality of electrical conductors includes a flange (43) for attaching the grommet assembly to a bulkhead panel (12) or the like having an aperture (40) therein of predetermined dimensions, a shank (38) which has a rearward portion (42) sized so as to extend through the aperture (40), the flange (43) being at a rearward end of the shank (38) for assisting in locating the rearward portion (42) of the shank in the panel aperture (40), and a pair of slots (54) which are formed in opposed walls of the shank (38) and are spaced from and generally parallel to the flange (43), and in which a U-shaped retainer (22) is slidable into the pair of slots (54) and has portions (59) for engaging opposed edge portions of the panel (12) adjacent the aperture (40) and thereby retaining the grommet assembly securely attached to the panel (12), characterised in that a rigid projection (44) extends from a wall of the shank (38) and is spaced from the flange (43) to form a slot (45) for receiving an edge portion of the panel (12) adjacent the aperture (40), the shank (38) includes a forward tapered portion so that the shank (38) is pivotable about the said edge portion of the panel (12) into the aperture (40), a flexible arm (48) is attached at a forward end thereof to a wall of the shank (38) opposite the rigid projection (44) and projects in a rearward direction towards the flange (43), and at least one latch projection (50 or 52) is provided on the flexible arm (48) for engaging an edge portion of the panel (12) adjacent the aperture (40) when the shank (38) is pivoted into the aperture (40) into an initial temporary position in which the U-shaped retainer is slideable into the said slots, during which insertion the grommet moves into its final position.

2. A grommet assembly according to claim 1, characterised in that a gasket (20) is mounted on the rearward portion (42) of the shank (38) in abutment with the flange (43), for engaging the panel (12) on assembly.

3. A grommet assembly according to claim 1 or 2, characterised in that the rigid projection (44) includes a convex guide surface (46) for engaging the edge portion of the panel (12) adjacent the aperture (40) and guiding the said edge portion into the slot (45).

4. A grommet assembly according to any one of claims 1 to 3, characterised in that a pair of longitudinally spaced latch projections (50 and 52) as aforesaid are provided on the flexible arm (48), with one (50) of the latch projections providing a temporary retention position during pivoting of the shank (38).

## Patentansprüche

1. Buchsenanordnung, bei der eine zur Aufnahme einer Vielzahl von elektrischen Leitern ausgelegte Buchse (32) aus hartem Kunststoffmaterial einen Flansch (43) zum Anbringen der Buchsenanordnung an einer Trennwand-Tafel (12) oder dergl. besitzt, welche eine Öffnung (40) von vorbestimmten Abmessungen in sich besitzt, mit einem Schaft (38), der einen hinteren Abschnitt (42) besitzt, der zum Erstrecken durch die Öffnung (40) bemessen ist, wobei der Flansch (43) sich an einem hinteren Ende des Schaftes (38) befindet sur Unterstützung der örtlichen Festlegung des hinteren Abschnittes (42) des Schaftes in der Tafel-Öffnung (40), und mit zwei Schlitzen (54), welche in einander entgegengesetzt liegenden Wänden des Schaftes (38) ausgebildet sind und mit Abstand allgemein parallel zu dem Flansch (43) verlaufen, und wobei ein U-förmiges Halteteil (22) in die beiden Schlitze (54) einleitbar ist und Abschnitte (59) zum Eingriff an entgegengesetzt liegenden Kantenabschnitten der Tafel (12) benachbart zur Öffnung (40) besitzt, um dadurch die Buchsenanordnung sicher an der Tafel (12) befestigt zurükzuhalten, dadurch gekennzeichnet, daß ein starrer Vorsprung (44) von einer Wand des Schaftes (38) vorsteht und einen Abstand von dem Flansch (43) besitzt zur Bildung eines Schlitzes (45) zur Aufnahme eines Kantenabschnittes der Tafel (12) benachbart zur Öffnung (40), daß der Schaft (38) einen vorderen, sich verjüngenden Abschnitt besitzt, so daß der Schaft (38) um den Kantenabschnitt der Tafel (12) in die Öffnung (40) hineinschwenkbar ist, daß ein flexibler Arm (48) an einem vorderen Ende desselben an einer Wand des Schaftes (38) entgegengesetzt zu dem starren Vorsprung (44) angebracht ist und in einer Richtung nach hinten zu dem Flansch (43) vorsteht, und daß mindestens ein Verriegelungsvorsprung (50 oder 52) an dem flexiblen Arm (48) vorgesehen ist zum Eingriff an einem Kantenabschnitt der Tafel (12) benachbart zur Öffnung (40), wenn der Schaft (38) in die Öffnung (40) in eine zeitweilige Anfangsstellung hineingeschwenkt wird, in welcher das U-förmige Halteteil in die Schlitze eingeführt werden kann, wobei sich die Buchse während des Einsetzens in ihre Endlage bewegt.

2. Busenanordnung nach Anspruch 1, dadurch gekennzeichnet, daß eine Ringdichtung (20) an dem hinteren Abschnitt (42) des Schaftes (38) in Anlage an dem Flansch (43) zum Eingriff mit der Tafel (12) beim Zusammenbau angebracht ist.

3. Buchsenanordnung nach Anspruch 1 oder 2, dadurch gekennzeichnet, daß der starre Vorsprung (44) ein konvexe Führungsfläche (46) zum Eingriff mit dem Kantenabschnitt der Tafel (12) benachbart zur Öffnung (40) und zum Einleiten des Kantenabschnittes in den Schlitz (45) enthält.

4. Buchsenanordnung nach einem der Ansprüche 1 bis 3, dadurch gekennzeichnet, daß zwei in Längsrichtung einen Abstand aufweisende Verriegelungsvorsprünge (50 und 52) wie erwähnt an dem flexiblen Arm (48) vorgesehen sind, wobei einer (50) der Verriegelungsvorsprünge eine zeitweilige Rastlage während des Schwenkens des Schaftes (38) ergibt.

## Revendications

1. Ensemble de manchon dans lequel un manchon (32) en matière plastique dure adapté pour recevoir plusieurs conducteurs électriques comprend une collerette (43) servant à fixer l'ensemble manchon passe-câbles à un panneau de cloison (12) équivalent muni d'une ouverture (40) de dimensions prédéterminées, un corps (38) qui possède une partie arrière (42) dimensionnée de manière à traverser l'ouverture (40), la collerette (43) étant située à une extrémité arrière du corps (38) pour faciliter le positionnement de la partie arrière (42) du corps dans l'ouverture (40) du panneau, et une paire de rainures (54) qui sont formées dans des parois opposées du corps (38) et sont espacées de la collerette (43) et à peu près parallèles à cette collerette et, un organe de retenue (22) en forme de U peut être glissé dans les deux rainures (54) et possède des parties (59) destinées à coopérer avec des parties opposées du bord du panneau (12) qui sont adjacentes à l'ouverture (40) et à retenir ainsi l'ensemble de manchon solidement fixé au panneau (12), caractérisé en ce qu'un bossage rigide (44) fait saillie sur une paroi du corps (38) et est espacé de la collerette (43) pour former une rainure (45) destinée à recevoir une partie de bord du panneau (12) adjacente à l'ouverture (40), le corps (38) comprend une partie avant à section décroissante, de manière que le corps (38) puisse être basculé autour de ladite partie de bord du panneau (12) dans l'ouverture (40), un bras flexible (48) est fixé, par son extrémité avant, à une paroi du corps (38) qui est à l'opposé du bossage rigide (45) et s'étend vers l'arrière, vers la collerette (43), et au moins un bossage de verrouillage (50 ou 52) est prévu sur le bras flexible (48) pour coopérer avec une partie de bord du panneau (12) adjacente à l'ouverture (40) lorsqu'on fait basculer le corps (38) dans l'ouverture (40), pour le placer dans une position initiale temporaire, dans laquelle l'organe de retenue en forme de U peut être glissé dans lesdites rainures, insertion pendant laquelle le manchon prend sa position finale.

2. Un ensemble de manchon selon la revendication 1, caractérisé en ce qu'une garniture d'étanchéité (20) est monté sur la partie arrière (42) du corps (38), en butée contre la collerette (43), pour coopérer avec le panneau (12), dans l'ensemble monté.

3. Un ensemble de manchon selon la revendication 1 ou 2, caractérisé en ce que le bossage rigide (44) comprend une surface de guidage convexe (46) destinée à coopérer avec la partie de bord du panneau (12) qui est adjacente à l'ouverture (40) et pour guider ladite partie de bord dans ladite rainure (45).

4. Un ensemble de manchon selon l'une quelconque des revendications 1 à 3, caractérisé en ce qu'une pair de bossages de verrouillage (50 et 52) espacés longitudinalement, comme indiqué plus haut, sont prévus sur le bras flexible (48), l'un (50) des bossages de verrouillage assurant une position de retenue temporaire pendant le basculement du corps (38).

Fig.1

Fig. 2

Fig. 3

Fig.5

Fig. 4

Fig. 6

Fig. 7